# EUROPÄISCHE PATENTSCHRIFT

(11) **EP 4 385 676 B1**
(45) Veröffentlichungstag und Bekanntmachung des Hinweises auf die Patenterteilung: **13.11.2024**
(21) Anmeldenummer: 22212791.2
(22) Anmeldetag: 12.12.2022
(51) Int. Cl.: B25J 9/16

(54) **VALIDIERUNG EINER POSE EINES ROBOTERS UND VON SENSORDATEN EINES MIT DEM ROBOTER MITBEWEGTEN SENSORS**
VALIDATION OF A POSE OF A ROBOT AND OF SENSOR DATA OF A SENSOR MOVING ALONG WITH THE ROBOT
VALIDATION DE LA POSE D'UN ROBOT ET DES DONNÉES D'UN CAPTEUR SE DÉPLAÇANT AVEC LE ROBOT

(43) Veröffentlichungstag der Anmeldung: 19.06.2024
(73) Patentinhaber: SICK AG, 79183 Waldkirch (DE)
(72) Erfinder: Gebauer, Jens, 79183 Waldkirch (DE); Hofmann, Christoph, 79108 Freiburg (DE)

(56) Entgegenhaltungen:
- US-A1- 2007 135 933
- US-A1- 2017 173 791
- US-A1- 2021 264 076
- US-A1- 2022 147 026

## Beschreibung

Die Erfindung betrifft die Validierung einer Pose eines Roboters und/oder von Sensordaten eines mit dem Roboter mitbewegten Sensors.

Das primäre Ziel der Sicherheitstechnik ist, Personen vor Gefahrenquellen zu schützen. Die hier betrachtete Gefahrenquelle ist ein Roboter insbesondere im industriellen Umfeld. Der Roboter wird mit Hilfe von Sensoren überwacht, und wenn demnach eine Situation vorliegt, in der eine Person in eine bezüglich des Roboters gefährliche Situation zu gelangen droht, wird eine geeignete Absicherungsmaßnahme ergriffen. In der Sicherheitstechnik eingesetzte Sensoren müssen besonders zuverlässig arbeiten und deshalb hohe Sicherheitsanforderungen erfüllen, beispielsweise die Norm EN ISO 13849 für Maschinensicherheit und die Gerätenorm IEC61496 oder EN61496 für berührungslos wirkende Schutzeinrichtungen (BWS). Zur Erfüllung dieser Sicherheitsnormen werden herkömmlich aufwändige Maßnahmen getroffen, wie sichere elektronische Auswertung durch redundante, diversitäre Elektronik, Funktionsüberwachung oder Überwachung der Verschmutzung optischer Bauteile.

In der sicherheitstechnischen Überwachung von Robotern, speziell Leichtbaurobotern, besteht ein zunehmender Wunsch nach engerer Zusammenarbeit mit Personen (MRK, Mensch-Roboter-Kollaboration) auch in komplexen Umgebungen. Relevante Normen in diesem Zusammenhang sind beispielsweise die EN ISO 10218 für Industrieroboter oder die ISO/TS 15066 für kollaborierende Roboter. Ähnliche Problemstellungen ergeben sich für Roboter in einem etwas weiteren Begriffsverständnis, beispielsweise AGVs/AGCs (Automated Guided Vehicle/Container) oder Drohnen.

Eine Grundvoraussetzung für eine verlässliche Absicherung ist, dass die Annahmen der Sicherheitsüberwachung an die Pose des Roboters hinreichend mit der Realität übereinstimmen. Dabei bedeutet Pose die Position und/oder Orientierung des Roboters in bis zu sechs Freiheitsgraden. Bei einem mehrgliedrigen Roboter gibt es noch mehr Freiheitsgrade, in diesem Fall wird die Pose häufig auf einen Endeffektor bezogen. Das weitere Erfordernis eines funktionstüchtigen Sensors wurde schon erwähnt. Hier besteht aber der Wunsch, die Anforderungen der einschlägigen Sicherheitsnormen einfacher zu erfüllen als durch die aufwändigen Maßnahmen, die einen Sensor schon für sich zu einem sicheren Sensor machen. Zudem lassen sich schlicht nicht alle Funktionen allein aus dem Sensor heraus prüfen. Beispielsweise muss dafür ein an einem Roboter angebrachter Sicherheitssensor an eine Testposition gefahren werden, um bekannte und wohldefinierte Umgebungsbedingungen für den Test vorzufinden. Damit ist nur ein aufwändiger, sporadisch stattfindender Test vor Anforderung möglich.

Die Validierung der Pose beziehungsweise der Sensordaten bezeichnet Tests, Vergleiche oder Prüfungen, mit denen die entsprechende normgerechte Verlässlichkeit sichergestellt wird. Dabei gibt es verschiedene Sicherheitsniveaus, die je nach Norm unterschiedliche Namen tragen. Zwei Beispiele sind die Performance Level (PL) a-e der EN 13849 und die Sicherheitsanforderungsstufen (SIL, Safety Integrity Levels) 1-4 der EN 61508. Sicher oder validiert bedeutet im Kontext dieser Beschreibung, dass Normvorschriften einer der genannten Sicherheitsnormen beziehungsweise einer vergleichbaren Sicherheitsnorm, insbesondere einer zukünftigen Nachfolgenorm, auf einem bestimmten Sicherheitsniveau eingehalten sind.

Bisher sind die Konzepte zur Validierung unbefriedigend, was nicht zuletzt daran liegt, dass es an sicheren Schnittstellen aus dem Roboter heraus fehlt. Beispielsweise verfügen manche Industrieroboter über eine sogenannte virtuelle Koordinatenbegrenzung, für die garantiert wird, dass ein Roboter die Koordinatenbegrenzung mit einer festgelegten Wahrscheinlichkeit nicht verlassen wird. Beispiele dafür sind die Funktionen Dual Check Safety von Fanuc oder SafeMove 2 von ABB. Allerdings ist dabei die tatsächliche Pose des Roboters innerhalb der virtuellen Koordinatenbegrenzung mangels sicherer Schnittstelle von außen nicht sicher oder validiert zugängig. Universal Robots bietet einen einzigen sicheren Raumpunkt als Sicherheitsfunktion an. Das reicht aber für allgemeine Anwendungen nicht aus.

Es ist im Stand der Technik weiterhin bekannt, Robotertrajektorien vorab zu simulieren und diese dann auf den Roboter aufzuspielen (Deployment). Dabei wird auch geprüft, ob die Simulation auf dem Roboter angekommen ist. Allerdings ist das keine Validierung im hier verwendeten Sinne, da diese Prüfung nicht sicherheitsgerichtet ist.

Die DE 10 2015 112 656 A1 offenbart einen Distanzsensor, der am Endeffektor eines Roboterarms mitbewegt wird und mit seinen Messstrahlen eine Art virtuelle Schutzglocke oder virtuellen Schutzmantel um das Werkzeug des Roboters aufspannt. Bei Eindringen eines sicherheitsrelevanten Objekts wird der Roboter gebremst oder angehalten. Der Distanzsensor ist jedenfalls im Verbund mit der übergeordneten Steuerung sicher ausgelegt, wobei aber zum Erreichen eines höheren Sicherheitsniveaus Tests in Form einer bereits erwähnten Referenzfahrt zu einem bekannten Referenzpunkt erforderlich sind.

Die EP 3 988 256 A1 sorgt für eine flexiblere Schutzglocke durch Anpassung der Abstandsschwellen, die gleichsam die Länge der Messstrahlen vorgeben. In diese Anpassung fließt ein jeweiliger verfügbarer Maximalabstand bis zum nächsten Hintergrundobjekt ein. Der Maximalabstand wird anhand einer Topographie der Umgebung berechnet. In Bezug auf eine Validierung ändert diese Erweiterung wenig, außer dass aus der bekannten Topographie zusätzliche Referenzpunkte abgeleitet werden könnten, was aber die EP 3 988 256 A1 nicht diskutiert.

Die EP 4 008 497 A1 befasst sich mit der Validierung der Pose eines Roboters, der durch einen mitbewegten Distanzsensor abgesichert wird. Dazu sind jedoch zusätzlich mehrere Inertialsensoren erforderlich, die an jeweils einem Glied des Roboters mitbewegt werden.

Aus der EP 2 378 445 B1 ist ein System zur sicherheitstechnischen Planung, Konfiguration und Analyse einer industriellen Anlage mit Gefährdungspotenzial bekannt, in dem Arbeitsbedingungen der Anlage dreidimensional simuliert werden. Mit einem Sensormodell werden Schutzfelder konfiguriert und dabei grafisch dargestellt. Das geht dem Betrieb voraus und betrifft daher keine Validierung, die Teil einer Absicherung in Echtzeit ist. Auch die EP 3 654 125 B1 betrifft die Konfiguration eines industriellen Sicherheitssystems. Dazu wird ein digitaler Zwilling erzeugt, der das System einschließlich Schutzfeldern simuliert. Nur am Rande und nur hinsichtlich der Schutzfelder wird diskutiert, wie der digitale Zwilling in Übereinstimmung mit der Realität gehalten werden kann.

In der DE 10 2017 111 885 A1 wird ein Verfahren zum Überwachen einer Maschine angegeben, bei dem die Bewegung der Maschine bestimmt wird, während die Maschine in einen sicheren Zustand verbracht wird. Insbesondere werden Stoppzeiten gemessen. Dazu nimmt eine mit dem Roboter mitbewegte Kamera die Umgebung aus der Ego-Perspektive auf, und aus der Bildsequenz werden die jeweiligen Eigenpositionen bestimmt. Eine Validierung findet dabei nicht statt.

Die EP 3 650 740 A1 bestimmt auf vergleichbare Weise die Bewegungsbahn einer mit einem Maschinenteil mitbewegten Kamera und vergleicht dies mit der Bewegung, die aus Positionssensoren an der Maschine ermittelt ist. Das ist eine Möglichkeit, die Bewegungsbahn eines Roboters zu prüfen. Sie ist jedoch sehr aufwändig. Fehler der Kamera werden allenfalls indirekt bemerkt, die Kamerabilder für sich sind nicht validiert.

Die US 2007/0135933 A1 beschreibt eine Programmierschnittstelle für ein Robotersystem, mit der Zugang zu einem simulierten und physischen System geschaffen wird. Dabei werden in einem Diagnosesystem das reale Robotersystem und das simulierte Robotersystem miteinander verglichen. Neben dem Roboter können Sensoren angeordnet sein, die verschiedene Zustände des Robotersystems erfassen.

In der US 2022/0147026 A1 wird eine Autokalibration für eine Roboterzelle beschrieben. Es wird eine virtuelle Repräsentation der Roboterzelle verwendet, um Erwartungen für Bewegungen des Roboterarms zu erzeugen. Mit Hilfe von Kameras wird geprüft, ob die Erwartungen der Realität entsprechen.

Die US 2021/0264076 A1 vergleicht in einem Halbleiterprozess Sensordaten mit simulierten Sensordaten.

Es ist daher Aufgabe der Erfindung, eine verbesserte Validierung für die Pose eines Roboters beziehungsweise die Sensordaten eines damit mitbewegten Sensors anzugeben.

Diese Aufgabe wird durch ein Verfahren zur Validierung einer Pose eines Roboters und/oder von Sensordaten eines mit dem Roboter mitbewegten Sensors nach Anspruch 1 sowie ein System mit einem Roboter, einem mitbewegten Sensor und einer Recheneinheit nach Anspruch 11 gelöst, in der das Verfahren implementiert ist. Eine Robotersteuerung bestimmt die reale Pose des Roboters. Der Begriff Pose wurde einleitend bereits definiert und bezeichnet die Position und/oder Orientierung des Roboters, vorzugsweise in den bis zu sechs Freiheitsgraden eines Endeffektors. Die reale Pose ist diejenige, mit der die Robotersteuerung für die Steuerung der Bewegungen des Roboters arbeitet. Reale Pose ist ein Gegenbegriff zur später eingeführten simulierten Pose. Die reale Pose ist noch nicht notwendig die tatsächlich eingenommene Pose. Diese Übereinstimmung ist noch nicht sichergestellt, das ist erst das Ziel der Validierung der Pose. Die Robotersteuerung kann über die hier vorgestellten Maßnahmen hinaus die tatsächlich eingenommene Pose mit üblichen Maßnahmen wie Encodern an den Gelenken des Roboters hinaus prüfen.

Ein Sensor wird mit dem Roboter mitbewegt, ist vorzugsweise daran angebracht, so dass der Sensor eine bis auf einen möglichen Versatz in Position und/oder Orientierung mit dem Roboter übereinstimmende Pose einnimmt. Der Sensor misst reale Sensordaten, sei es in Form von Rohdaten oder deren Verarbeitung zu Messwerten. Erneut unterscheidet der Begriff reale Sensordaten von noch einzuführenden simulierten Sensordaten. Validierung von Sensordaten bedeutet, dass geprüft wird, ob Sensordaten entsprechend der erwarteten sicheren Funktion des Sensors gemessen werden. Welche Sensordaten gemessen werden, hängt neben dem Sensor und dessen Funktionsfähigkeit von weiteren Randbedingungen wie der Pose und der erfassten Umgebung ab.

Die Erfindung geht von dem Grundgedanken aus, den Roboter und den Sensor zu simulieren, dadurch eine simulierte Pose und simulierte Sensordaten zu erzeugen und eine Validierung von Pose und Sensordaten durch diverse Quervergleiche durchzuführen. Eine Robotersimulation führt virtuell Bewegungen des Roboters durch, aus denen eine jeweilige simulierte Pose resultiert. Eine Sensorsimulation simuliert Messungen des Sensors insbesondere aus der realen Pose oder der simulierten Pose, aus denen jeweilige simulierte Sensordaten resultieren. Die Robotersimulation und die Sensorsimulation werden auch als digitaler Zwilling des Roboters beziehungsweise des Sensors bezeichnet, weil sie die relevanten Eigenschaften des simulierten Objekts möglichst treu virtuell reproduzieren. Je nach Ausführungsform der Erfindung sind nun verschiedene Vergleiche und Kombinationen von Vergleichen für die Validierung möglich. Dazu zählen ein Vergleich einer aus den simulierten Sensordaten rekonstruierten Pose des Roboters mit der simulierten Pose des Roboters, ein Vergleich von realen Sensordaten auf Basis der realen Pose des Roboters mit simulierten Sensordaten auf Basis der simulierten Pose des Roboters und/oder ein Vergleich von simulierten Sensordaten untereinander, wobei ein Vergleich von simulierten Sensordaten auf unterschiedlichen Szenarien basiert, nämlich aus einer realen Pose des Roboters und einer simulierten Pose des Roboters heraus. Die Pose beziehungsweise die Sensordaten gelten genau dann als validiert, wenn der Vergleich eine hinreichende Übereinstimmung ergibt. Welche Toleranzen über welche Zeitdauer toleriert werden, kann beispielsweise durch Schwellen, prozentuale Unterschiede und Wiederholungen der Validierung beziehungsweise Zeitfenster festgelegt werden, wobei die Toleranzen je nach zu erreichendem Sicherheitsniveau festgelegt sein können.

Es handelt sich um ein computerimplementiertes Verfahren, dass beispielsweise in einer eigenen Sicherheitssteuerung oder einem sonstigen Rechenbaustein abläuft, der an den mindestens einen Distanzsensor und den Roboter angeschlossen ist. Auch eine Implementierung in der Robotersteuerung oder eine verteilte Implementierung ist denkbar.

Die Erfindung hat den Vorteil, dass durch das Zusammenspiel von simulierten und echten Daten vielfältige Validierungsmöglichkeiten einer hohen und anpassbaren Güte erreicht werden. Die Sensordaten können den Validierungskreis schließen und den Roboter mit dessen Pose korrekt einbeziehen. Die realen oder simulierten Sensordaten oder daraus abgeleitete Größen, wie Distanzwerte oder Schutzfelder, können unterstützend visualisiert werden, insbesondere besonders intuitiv mittels Augmented Reality. Dabei sind erfindungsgemäße Validierungen sogar nachrüstbar. Sie kommen mit den verfügbaren, nicht auf Sicherheit ausgelegten Schnittstellen gängiger Roboter aus. Dabei ist das Verfahren bei verschiedensten Robotern und Robotertypen mit unterschiedlicher Anzahl Achsen sowie kinetmatisch redundanten Robotern anwendbar, insbesondere bei Cobots und Industrierobotern.

Der Roboter wird bevorzugt in einen sicheren Zustand überführt, wenn die Pose des Roboters nicht validiert wird und/oder wenn die Sensordaten nicht validiert werden. Die Sicherheit kann mangels erfolgreicher Validierung nicht gewährleistet werden. Sicherer Zustand bedeutet, dass ein Unfall ausgeschlossen ist, was je nach Anwendung und Situation durch Maßnahmen wie langsamere Bewegungen, einen eingeschränkten Arbeitsbereich oder notfalls ein Anhalten des Roboters erreicht wird. Wie schon erwähnt, geht es bei der Validierung vorzugsweise nicht um eine transiente oder geringfügige Abweichung, solche Toleranzen sind in die gescheiterte Validierung bereits eingeflossen.

Die Sensorsimulation umfasst bevorzugt eine Umgebungssimulation einer Umgebung des Roboters, und die simulierten Sensordaten werden unter Einbeziehung der Umgebungssimulation bestimmt. Die simulierten Sensordaten entstehen somit aus dem Zusammenspiel der Sensorsimulation mit der simulierten Umgebung. Die realen Sensordaten werden entsprechend unter Einfluss der realen Umgebung bestimmt, das passiert automatisch im Rahmen der Messung. Die Umgebung ist beispielsweise eine Arbeitsfläche mit den darauf befindlichen Objekten. Für optische Sensoren ist in erster Linie die Oberfläche von Interesse, und im Falle einer Abstandsmessung nur deren Topographie, d.h. eine 3D-Kontur der Umgebung des Roboters. Vorzugsweise findet in der relevanten Umgebung keine Bewegung statt, dann ist eine Umgebungssimulation im eigentlichen Sinne nicht erforderlich, es genügt ein Modell der statischen Umgebung, das vorab vermessen wird oder beispielsweise als CAD-Modell vorgegeben wird, das für Roboterzellen ohnehin häufig erstellt wurde. Bewegte Simulationen, wie kinematisch animierte Modelle etwa aus einem industriellen Metaverse, sind aber auch vorstellbar.

Der Roboter weist bevorzugt einen Endeffektor auf, und die reale Pose des Roboters weist eine reale Pose des Endeffektors und die simulierte Pose des Roboters eine simulierte Pose des Endeffektors auf, insbesondere bestimmt mittels Vorwärtskinematik. Der Endeffektor, an dem typischerweise ein Werkzeug mit womöglich spitzer oder scharfer Kontur, einem erhitzten Arbeitskopf oder dergleichen befestigt wird, ist regelmäßig die wesentliche Gefahrenquelle. Es ist daher besonders vorteilhaft, die zu validierende Pose am Endeffektor festzumachen. Die Pose des Endeffektors lässt sich aus den einzelnen Gelenkstellungen mittels der Vorwärtskinematik und insbesondere einer Denavit-Hartenberg-Transformation bestimmen. Eine Robotersteuerung bestimmt die Vorwärtskinematik meist ohnehin für die Steuerung des Arbeitsablaufs. Die Robotersimulation ist nach dieser Ausführungsform ebenfalls entsprechend ausgebildet, einschließlich der Einbeziehung eines Endeffektors beziehungsweise einer Vorwärtskinematik.

Der Sensor ist bevorzugt mit dem Endeffektor mitbewegt an dem Roboter angebracht. Dadurch werden ein Werkzeug am Endeffektor sowie der längste Hebel beziehungsweise Teil des Roboters mit der größten Reichweite besonders wirkungsvoll überwacht, um Gefahren rechtzeitig zu erkennen und darauf angemessen zu reagieren. Diese und weitere unten erläuterte Eigenschaften des Sensors werden vorzugsweise auf die Sensorsimulation übertragen.

Der Sensor ist vorzugsweise eine TOF-Kamera oder ein berührungslos messender Distanzsensor, der längs mindestens eines Sichtstrahls einen Abstandswert misst, insbesondere ein optoelektronischer Sensor, der für eine Messung von Abständen mit einem Lichtlaufzeitverfahren ausgebildet ist. Solche Distanzsensoren können kostengünstig, leicht und kompakt gebaut werden und sind in der Lage, sicherheitsrelevante Eingriffe verlässlich zu erkennen. Vorzugsweise werden Abstandswerte für eine Vielzahl von Sichtstrahlen gemessen, wobei mehrere Sichtstrahlen von demselben Distanzsensor ausgehen, jeweils ein Sichtstrahl von einem von mehreren Distanzsensoren ausgeht oder ein- und mehrstrahlige Distanzsensoren gemischt verwendet werden. Eine TOF-Kamera (Time of Flight, 3D-Kamera mit Messung der Lichtlaufzeit in ihren Pixeln) spannt Sichtstrahlen mit jedem Pixel auf, wobei Pixel zusammengefasst oder ausgewählt werden können, um bestimmte Sichtstrahlen zu ergeben.

Der Distanzsensor ist bevorzugt ein sicherer Sensor und/oder die Funktionsfähigkeit des Distanzsensors wird zyklisch überprüft und/oder die Abstandswerte mehrerer Distanzsensoren zur Erzeugung sicherer Abstandswerte werden untereinander verglichen. Damit sind neben der erfindungsgemäßen Validierung über Simulationen einige weitere Maßnahmen zum Erreichen eines sicheren Sensors ergriffen. Insbesondere kann so ein noch höheres Sicherheitsniveau erreicht werden. Wie schon einleitend erwähnt, sind Begriffe wie "sicher" oder "Sicherheitssensor" im Sinne dieser Beschreibung immer so zu verstehen, dass eine Sicherheitsnorm für Anwendungen der Sicherheitstechnik oder zur Unfallvermeidung im industriellen Bereich, insbesondere für Maschinensicherheit, berührungslos wirkende Schutzeinrichtungen, Industrieroboter, Kollaboration mit Robotern oder dergleichen erfüllt ist. Das können die einleitend genannten Normen oder deren Nachfolger, Erweiterung oder jeweilige Entsprechung in anderen Weltregionen sein.

Vorzugsweise werden die längs eines jeweiligen Sichtstrahls gemessenen Abstandswerte mit einer Abstandsschwelle verglichen, um zu entscheiden, ob der Roboter in einen sicheren Zustand überführt wird. Dadurch werden von dem Sensor ausgehend schützende Sichtstrahlen einer der Abstandsschwelle entsprechenden Länge aufgespannt. Die Sichtstrahlen bilden so eine virtuelle Schutzglocke, mit der eine gefährliche Annäherung an den Roboter erkannt wird. Eingriffe in die Sichtstrahlen jenseits der Abstandsschwelle haben ausreichenden Abstand zu dem Roboter und sind nicht mehr sicherheitsrelevant. Die Abstandsschwellen können sich voneinander unterscheiden, damit die Schutzglocke eine entsprechende Kontur erhält, und auch dynamisch angepasst werden, beispielsweise bei Annäherung an eine Arbeitsfläche.

Die von der Robotersteuerung zur Verfügung gestellte reale Pose kann mit der simulierten Pose der Robotersimulation verglichen werden. Damit ist zunächst nur eine Übereinstimmung der Vorstellungen der Robotersteuerung und der Robotersimulation über die Bewegungen und die Pose des Roboters überprüft. Das kann aber als Voraussetzung für weitere Schritte der Validierung wichtig sein. Die Übereinstimmung zwischen realer Pose und simulierter Pose kann auch auf auf andere Weise oder mittelbar geprüft werden.

In einer der erfindungsgemäßen Alternativen wird aus den simulierten Sensordaten eine rekonstruierte Pose des Roboters bestimmt und mit der simulierten Pose verglichen. Die Sensordaten lassen in Kenntnis der Umgebung jeweils Rückschlüsse auf die Pose zu, in der sie erfasst wurden. Oft ist das noch nicht eindeutig, aber mit einer entsprechenden Mehrfacherfassung aus mehreren Posen lässt sich die Bewegung und damit die zu einem jeweiligen Zeitpunkt eingenommene Pose rekonstruieren. Die aus den Sensordaten rekonstruierte Pose wird dann als Validierung oder Teil der Validierung mit der der simulierten Pose verglichen. Ausgangspunkt dieser Validierung sind die Sensordaten, aber der Vergleich erfolgt nicht auf Ebene von Sensordaten, sondern von einer daraus rekonstruierten Pose.

In einer anderen Formulierung einer weiteren der erfindungsgemäßen Alternative werden in einer nach einer Bewegung des Roboters erreichten realen Pose mit dem Sensor reale Sensordaten erfasst und mit simulierten Sensordaten verglichen, die die Sensorsimulation in einer simulierten Pose bestimmt, die nach Simulation der Bewegung in der Robotersimulation erreicht wurde. Bei diesem Vorgehen stehen auf der einen Seite des Vergleichs nur reale Daten, nämlich reale Sensordaten aus einer realen Pose des Roboters, und auf der anderen Seite rein simulierte Daten, nämlich simulierte Sensordaten auf Basis einer simulierten Pose des Roboters. Eine Übereinstimmung zeigt an, dass die kombinierte Simulation von Roboter und Sensor die Wirklichkeit hinreichend trifft. Damit sind die Funktion des Sensors und zugleich die Pose des Roboters validiert. Denn bei falschen Annahmen an die Pose würde es keine Übereinstimmung der Sensordaten geben, jedenfalls nicht über eine Bewegung mit mehreren Posen hinweg. Die Betrachtung gilt nur bei einer erfolgreichen Validierung, da bei Nichtübereinstimmung nicht klar ist, ob der Fehler bei den Sensordaten oder bei der Pose liegt. Das ist aber sicherheitstechnisch nicht von Belang, da jedenfalls ein relevanter Fehler aufgedeckt wurde, wo genau dieser Fehler liegt, ist höchstens für eine Diagnose und Fehleranalyse von Interesse, nicht aber für die Unfallvermeidung selbst.

In einer Alternative, die nicht unter den Anspruch fällt, werden in einer nach einer Bewegung des Roboters erreichten realen Pose mit dem Sensor reale Sensordaten erfasst und mit simulierten Sensordaten verglichen, die die Sensorsimulation in der realen Pose bestimmen. Das Vorgehen ähnelt demjenigen des Vorabsatzes. Auf der einen Seite des Vergleichs stehen wiederum nur reale Sensordaten aus einer realen Pose des Roboters. Auf der anderen Seite des Vergleichs steht aber nun ein Hybrid aus Simulation und Realität, denn die Sensorsimulation setzt auf der realen Pose auf. Damit wird nur die Funktion des Sensors validiert, und dies unmittelbar, da nun die Pose als Fehlerquelle ausgeschlossen ist.

Durch Kombination der beiden zuletzt geschilderten Validierungen kann somit auch geklärt werden, ob ein Scheitern einer Validierung dem Sensor oder der Pose zuzurechnen ist. Das ist ein Beispiel dafür, dass es sinnvoll sein kann, mehrere Validierungen miteinander zu kombinieren, um ein höheres Sicherheitsniveau oder eine verbesserte Diagnose zu erreichen. Die Erfindung umfasst auch die weiteren Kombinationen der erläuterten Validierungen.

In vorteilhafter Weiterbildung wird ein System angegeben, das einen Roboter, eine Robotersteuerung, einen mit dem Roboter mitbewegten Sensor sowie eine mindestens mittelbar mit der Robotersteuerung und dem Sensor verbundene Recheneinheit aufweist. In der Recheneinheit sind eine Robotersimulation zum Simulieren von Bewegungen des Roboters und eine Sensorsimulation zum Simulieren von Messungen des Sensors sowie eine Ausführungsform eines erfindungsgemäßen Verfahrens zur Validierung einer Pose des Roboters und/oder von Sensordaten des Sensors implementiert sind. Das System umfasst somit den Roboter, den mitbewegten Sensor, deren jeweilige digitale Zwillinge und eine Recheneinheit, um die Validierung durch Vergleiche zwischen den realen und simulierten Posen beziehungsweise den realen und simulierten Sensordaten durchzuführen.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Übersichtsdarstellung eines Roboters mit einem daran angebrachten und mitbewegten Sensor;
- Fig. 2: eine Blockdarstellung eines Systems aus einem Roboter, einem mitbewegten Sensor und zugehörigen digitalen Zwillingen, d.h. einer Robotersimulation und einer Sensorsimulation;
- Fig. 3: eine Tabelle, die verschiedene Validierungen auf Basis von realen und simulierten Daten listet;
- Fig. 4: eine Tabelle, die Eigenschaften und Vorteile jeweiliger Validierungen aufführt;
- Fig. 5: eine Übersicht möglicher Validierungspfade;
- Fig. 6: eine Ausschnittdarstellung der Figur 5 mit nur einem Validierungspfad, der reale und simulierte Posen des Roboters miteinander vergleicht;
- Fig. 7: eine alternative Darstellung des Validierungspfades gemäß Figur 6;
- Fig. 8: eine Ausschnittdarstellung der Figur 5 mit zwei von deren Validierungspfaden, die reale und simulierte Sensordaten miteinander vergleichen;
- Fig. 9: eine alternative Darstellung des einen Validierungspfades gemäß Figur 8;
- Fig. 10: eine alternative Darstellung des anderen Validierungspfades gemäß Figur 8; und
- Fig. 11: eine Ausschnittdarstellung der Figur 5 mit zwei von deren Validierungspfaden, die eine Pose aus Sensordaten rekonstruieren und die rekonstruierte Pose mit einer realen Pose beziehungsweise einer simulierten Pose vergleichen.

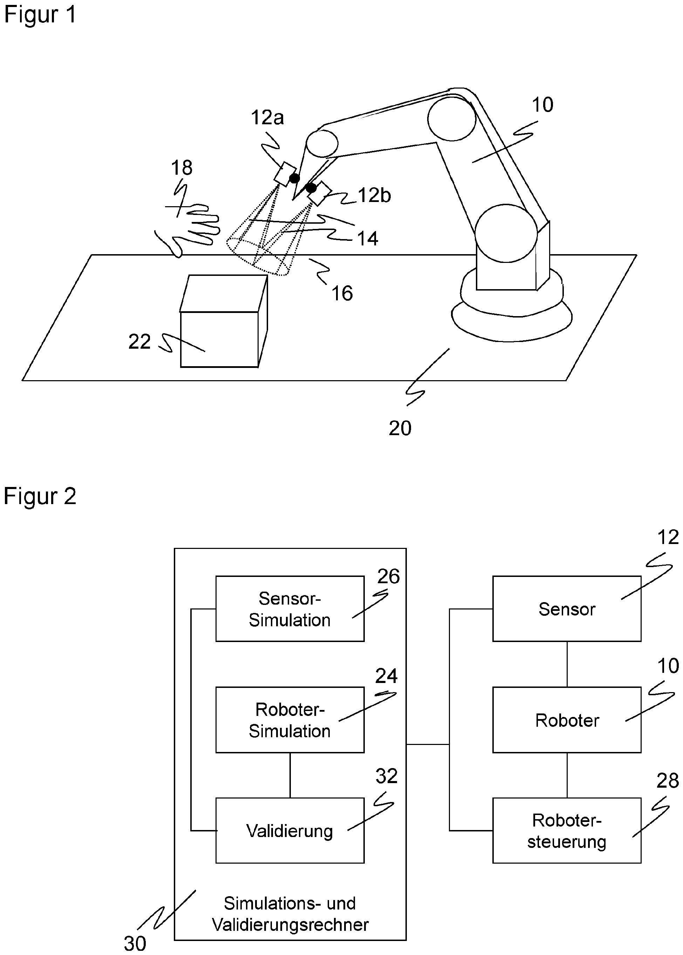

Figur 1 zeigt eine Übersichtsdarstellung eines abzusichernden Roboters 10, der in einem "Pick-and-Place"-Szenario mit einer Bedienperson zusammenarbeitet. Die Ausgestaltung des Roboters 10 als Roboterarm und die spezielle Anwendung sind Beispiele, und die nachfolgenden Erläuterungen sind auf beliebige Roboter und Szenarien übertragbar, insbesondere AGVs/AGCs (Automated Guided Vehicle / Container) oder Drohnen.

Zur Absicherung hier speziell des Endeffektors an dessen Spitze sind an dem Roboter 10 Distanzsensoren 12a-b angebracht, vorzugsweise in der Umgebung eines Werkzeugs zu dessen Absicherung (EOAS, End-of-Arm-Safeguarding). Die Distanzsensoren 12a-b bestimmen Abstandswerte längs mehrerer Sichtstrahlen 14. Die gezeigte Anzahl von zwei Distanzsensoren 12a-b ist rein beispielhaft, es können mehr Distanzsensoren oder nur ein Distanzsensor sein, der dann allerdings längs mehrerer Sichtstrahlen 14 messen kann. Allgemein gehen von jedem Distanzsensor 12a-b eine oder mehrere Sichtstrahlen 14 aus. Sichtstrahlen 14 können annähernd geometrische Strahlen sein oder einen endlichen Querschnitt aufweisen, wenn beispielsweise der Distanzsensor 12a-b als Flächentaster mit aufgefächertem Lichtstrahl arbeitet. Als Distanzsensoren 12a-b eignen sich besonders optoelektronische Abstandssensoren beispielsweise mit Messung der Lichtlaufzeit (ToF, Time of Flight). Die einleitend genannte DE 10 2015 112 656 A1 stellt ein derartiges System vor, auf das ergänzend verwiesen wird. Es gibt aber auch andere optoelektronische Sensoren, um Abstände zu bestimmen, wie Laserscanner und 2D- oder 3D-Kameras, und andere Absicherungskonzepte eines Roboters 10 mit einem Sensor als durch Messung von Abständen, ebenso wie ganz andere Technologien, etwa Ultraschallsensoren, kapazitive Sensoren, Radarsensoren und dergleichen. Die Absicherung mittels Distanzsensoren 12a-b ist also ebenso wie das Anwendungsszenario und der Roboter 10 als Beispiel zu verstehen.

Während des Betriebs werden die von den Distanzsensoren 12a-b gemessenen Abstandswerte mit Abstandsschwellen verglichen. Die Abstandsschwellen definieren einen von dem jeweiligen Distanzsensor 12a-b ausgehenden Abschnitt der Sichtstrahlen 14, der als schützender Strahl bezeichnet werden kann. Die schützenden Strahlen gemeinsam bilden eine Art virtuellen Schutzmantel oder virtuelle Schutzglocke 16 um den Endeffektor. Die Abstandsschwellen können je nach Sichtstrahl 14 und/oder Bewegungsabschnitt des Roboters 10 unterschiedlich gesetzt sein. Greift eine Person beispielsweise mit ihrer Hand 18 in den mittels der Schutzglocke 16 abgesicherten Bereich ein und unterbricht damit einen der Sichtstrahlen 14 in einem kürzeren Abstand als die zugehörige Abstandsschwelle, so wird die Schutzglocke 16 als verletzt angesehen. Deshalb wird eine sicherheitsgerichtete Reaktion des Roboters 10 ausgelöst, die abhängig von den verletzten Abstandsschwellen in einem Verlangsamen, Ausweichen oder einem Nothalt bestehen kann. Ohne Fremdobjekt wie die Hand 18 messen die Distanzsensoren 12a-b den jeweiligen Abstand zur Umgebung, die in Figur 1 stellvertretend durch eine Arbeitsfläche 20 und ein Objekt 22 dargestellt ist.

Figur 2 zeigt eine Blockdarstellung eines Systems aus dem Roboter 10, dem mitbewegten Sensor 12 und zugehörigen digitalen Zwillingen, d.h. einer Robotersimulation 24 und einer Sensorsimulation 26. Der Roboter 10 wird von einer Robotersteuerung 28 gesteuert. Die Simulationen 24, 26 sind auf einer Recheneinheit 30 implementiert, die digitale Rechen- und Speicherkapazitäten in beliebiger Hardware zur Verfügung stellt, beispielsweise als Sicherheitssteuerung, als dedizierter Computer, als Edge Device oder auch als Cloud. Die Recheneinheit 30 umfasst ferner eine Validierungseinheit 32, in der reale und simulierte Daten vorzugsweise in Echtzeit verglichen werden können, um die noch anhand verschiedener Ausführungsformen zu beschreibenden Validierungen durchzuführen.

Die Robotersimulation 24 kann beispielsweise in ROS (Roboter Operating System) abgebildet sein und eine Trajektorie des Roboters 10 beziehungsweise des simulierten Roboters beispielsweise mit MovelT geplant werden. Alternativ sind andere Implementierungen denkbar, beispielsweise native Simulationsprogramme von Roboterherstellern wie RobotStudio von ABB oder URSim von Universal Robots.

Die Sensorsimulation 26 kann für das Beispiel von Distanzsensoren 12a-b auf der einleitend genannten EP 3 988 256 A1 fußen. Sensordaten hängen natürlich nicht allein vom Sensor 12 ab, sondern entscheidend auch von der Umgebung. Entsprechend muss genaugenommen für die Sensorsimulation 26 ein digitaler Zwilling der Umgebung geschaffen werden. Das ist allgemein denkbar und von der Erfindung umfasst. Die Simulation einer komplexen dynamischen Umgebung ist aber häufig nicht handhabbar. Daher kann es sinnvoll sein, sich auf ein Oberflächenmodell als digitaler Zwilling der Umgebung zu beschränken, also die Topographie oder Kontur beispielsweise der Arbeitsoberfläche 20 und eines bekannten Objekts 22 darauf im Beispiel der Figur 1. Wie schon erwähnt, ist ein komplexerer und insbesondere dynamischer digitaler Zwilling der Umgebung nicht ausgeschlossen. Im Folgenden ist das Verständnis der Sensorsimulation 26, dass die Umgebung oder deren digitaler Zwilling darin berücksichtigt ist. Gemäß EP 3 988 256 A1 werden dazu Sichtstrahlen 14 mit der bekannten Topographie geschnitten, um Abstandsmessungen zur Umgebung zu simulieren.

Zusammenfassend gibt es damit vier Datenquellen für eine Validierung, davon zwei real und zwei virtuell oder simuliert: Die Robotersteuerung 28 liefert die jeweilige reale Pose des Roboters 10. Insbesondere ist das die Vorwärtskinematik, die die Pose eines Endeffektors (TCP, Tool Center Point) des Roboters 10 in bis zu sechs Freiheitsgraden der Position und der Drehung angibt. Der Sensor 12 misst reale Sensordaten, die von der Perspektive des Sensors 12 und damit der realen Pose des Roboters 10 abhängig sind. Entsprechend erzeugen die Robotersimulation 24 eine jeweilige simulierte Pose des Roboters 10 und die Sensorsimulation 26 jeweilige simulierte Sensordaten, wobei diese wahlweise aus der realen Pose oder der simulierten Pose heraus simuliert sein können.

Mit diesem System werden nun die Posen des Roboters 10 und die Sensordaten validiert. Die Validierung gilt als gescheitert, wenn bei den Vergleichen tolerierbare Schwellen in den Unterschieden oder Zeitfenster einer tolerierten Abweichung überschritten werden. Dann wird vorzugsweise der Roboter 10 in einen sicheren Zustand überführt.

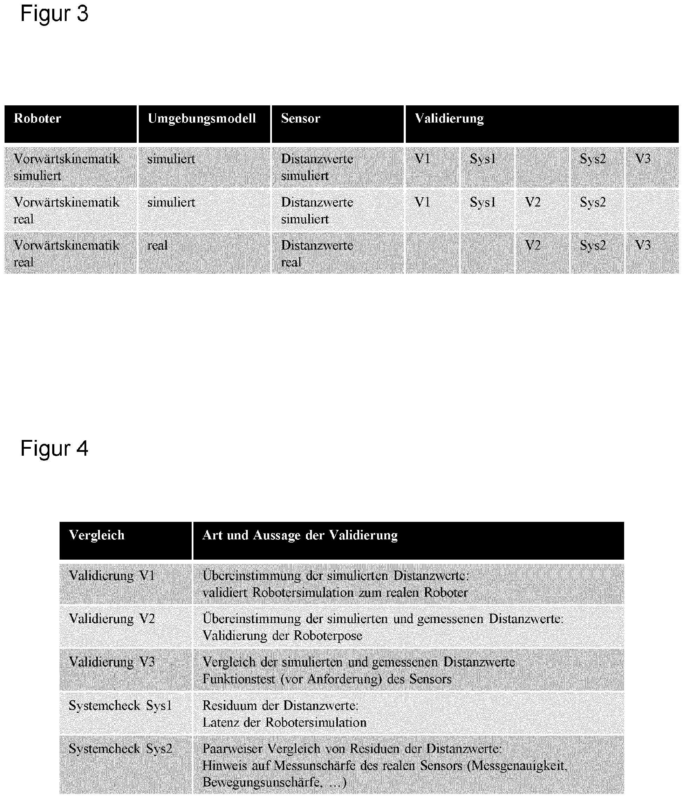

Figur 3 zeigt eine Tabelle, die verschiedene Validierungen auf Basis von realen und simulierten Daten listet. Dabei werden durch die Simulationen Erwartungshaltungen erzeugt und untereinander oder mit realen Daten verglichen. In den rechten drei Spalten sind verschiedene Kombinationen aus realen und simulierten Daten von Roboter, Umgebungsmodell und Sensor angegeben. In der rechten Spalte sind Kürzel für diverse Validierungen und Systemchecks angegeben, die durch die jeweilige Kombination ermöglicht werden, wobei ein Systemcheck ebenfalls als Validierung zumindest in einem weiteren Sinn aufgefasst werden kann, weil dadurch eine Funktion überprüft wird. Wenn beispielsweise V1 in der ersten und zweiten Zeile auftaucht, dann sind die entsprechenden Kombinationen aus den drei linken Spalten geeignet, die beiden Vergleichswerte für die Validierung V1 zu liefern. Für die anderen Kürzel gilt das sinngemäß.

Figur 4 zeigt eine Tabelle, in der die Validierungen aus der rechten Spalte der Tabelle von Figur 3 in Kurzform erläutert werden. Eine Validierung V1 prüft die Übereinstimmung der simulierten Sensordaten, insbesondere der simulierten Distanzwerte. Etwas detaillierter wird die Vorwärtskinematik aus der Robotersteuerung 28 ausgelesen, somit eine reale Pose gewonnen. Dies wird in die Sensorsimulation 26 eingespeist, um Sensordaten aus der realen Pose zu simulieren. Das gleiche geschieht mit der in der Robotersimulation 24 simulierten Vorwärtskinematik, mittels derer die Sensorsimulation 26 Sensordaten aus der simulierten Pose simuliert. In der Sensorsimulation 26 können als virtuelle Umgebung Oberflächen gewählt werden, die eine Anwendung möglichst treu wiedergeben, oder alternativ beliebige auch fiktive Oberflächen. Die auf zwei unterschiedlichen Wegen simulierten Sensordaten werden nur übereinstimmen, wenn die Robotersimulation 24 die Bewegungen des Roboters 10 tatsächlich vorhersagt (richtiges Deployment).

Eine Validierung V2 setzt mit beiden Vergleichswerten auf der realen Pose auf. Mit diesem Ausgangspunkt werden einmal Sensordaten real gemessen und einmal simuliert, und beides wird miteinander verglichen. Hier muss die Sensorsimulation eine möglichst wirklichkeitstreue Umgebung verwenden, ansonsten kann keine Übereinstimmung erwartet werden. Eine erfolgreiche Validierung V2 validiert die Pose des Roboters 10, insbesondere des Endeffektors in allen sechs Freiheitsgraden. Im Falle von Distanzsensoren 12a-b können einzelne Sichtstrahlen 14, alle Sichtstrahlen 14 oder eine Untermenge davon zugrunde gelegt werden, wobei die Untermenge systematisch oder willkürlich permutiert werden kann. Die Validierung V2 kann lediglich für eine gewisse Mindestanzahl von Sichtstrahlen 14 gefordert werden, oder es wird ein statistisches Maß von Abweichungen über Sichtstrahlen 14 hinweg geprüft. Die Verwendung nicht aller Sichtstrahlen 14 zur Validierung hat den Vorteil, dass auch in Eingriffssituationen beispielsweise durch die Hand 18 noch Sichtstrahlen 14 zur Verfügung stehen, in denen eine Übereinstimmung zwischen Simulation und Wirklichkeit erwartet werden kann. Für die unerwartete Hand 18, die im Umgebungsmodell nicht berücksichtigt sein kann, würde das nämlich nicht gelten, so dass hiervon betroffene Sichtstrahlen 14 keine Validierung und damit sichere Bestimmung der Pose des Roboters 10 erlauben, die beispielsweise für ein Ausweichmanöver benötigt wird.

Eine Validierung V3 bildet die bisher fehlende dritte Kombinationsmöglichkeit der drei Zeilen aus der Tabelle der Figur 3. Im Gegensatz zu der Validierung V2 basiert die Sensorsimulation 26 nun gemäß der ersten Zeile statt der zweiten Zeile auf einer simulierten Pose. Das ermöglicht einen Funktionstest des Sensors 10.

Ein Systemcheck Sys1 fußt auf derselben Kombinatorik von Daten wie die Validierung V1 und bewertet den Restfehler der Distanzwerte, um daraus auf eine Latenz der Robotersimulation zu schließen. Ein Systemcheck Sys2 nutzt alle drei Datenquellen der Zeilen aus der Tabelle gemäß Figur 3 und führt einen paarweisen Vergleich der Restfehler der Distanzwerte durch. Damit können Hinweise auf Messfehler gefunden werden beziehungsweise die Messgenauigkeit des Sensors 12 bewertet werden, zu der neben systemimmanenten Messfehlern auch Effekte wie eine Bewegungsunschärfe beitragen können.

Ganz besonders vorteilhaft ist es, Kombinationen dieser Validierungen zu bilden, insbesondere die Kombination der Validierungen V1+V2+V3, um somit ein verlangtes beziehungsweise höheres Sicherheitsniveau des Systems zu erzielen. Andere Kombinationen sind ebenso denkbar, auch unter Einbeziehung der Systemchecks Sys1 und/oder Sys2.

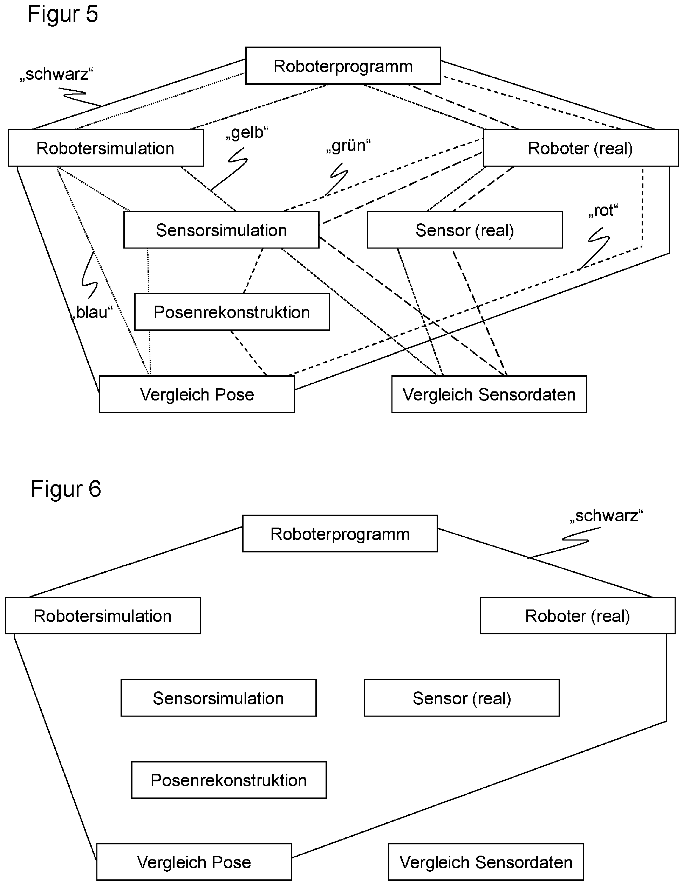

Figur 5 zeigt eine Übersicht möglicher Validierungspfade. Das ist eine alternative und zumindest in Teilen mit den Tabellen der Figuren 3 und 4 überlappende Darstellung möglicher Validierungen. Die meisten in Figur 5 beteiligten Komponenten wurden bereits vorgestellt oder sind vor dem Hintergrund der bisherigen Erläuterungen selbsterklärend, wie die unten dargestellten Vergleiche von Posen und Sensordaten, wobei nun aus Gründen der Übersichtlichkeit auf Bezugszeichen verzichtet wurde. Hinzu kommt ein Roboterprogramm als Wurzel, das lediglich eine gemeinsame Klammer bilden soll, sowie eine noch zu beschreibende Posenrekonstruktion.

Der reinen Kombinatorik nach gäbe es eine Unzahl von Pfaden durch die Komponenten der Figur 5 entsprechend den zahlreichen Möglichkeiten, die vier Datenquellen realer Roboter 10, Robotersimulation 24, realer Sensor 12 und Sensorsimulation 26 zu nutzen oder nicht zu nutzen und untereinander zu vergleichen. Nur einige dieser Pfade sind aber wirklich vorteilhaft für eine Validierung, und Figur 5 hebt fünf solcher Pfade hervor. In einer Schwarzweißdarstellung stehen für die Unterscheidung der Pfade nur Strichmuster zur Verfügung. Um die Pfade sprachlich besser zu unterscheiden, sind sie zusätzlich mit einer Farbe beschriftet. Es gibt demnach einen schwarzen, blauen, roten, grünen und gelben Pfad. Diese Farben sind lediglich Namen, um die Pfade sprachlich voneinander trennen zu können. Die Validierung eines Pfades schließt die zugehörigen Kommunikationswege ein.

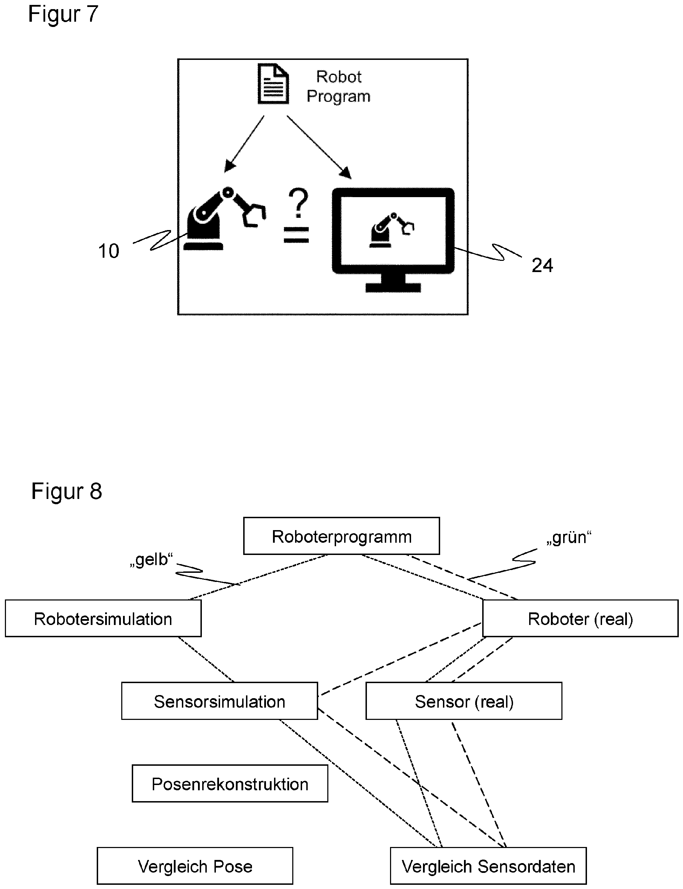

Figur 6 zeigt, um die überlagerte Darstellung der Figur 5 zu entzerren, nur den "schwarzen" Validierungspfad, der isoliert keine Ausführungsform der Erfindung darstellt. Damit werden die reale Pose aus der Robotersteuerung 28 und die simulierte Pose aus der Robotersimulation miteinander verglichen, insbesondere die reale und simulierte Pose des Endeffektors (TCP). Figur 7 illustriert dies in einer alternativen Darstellung. Reale oder simulierte Sensordaten fließen in den "schwarzen" Pfad nicht ein. Vorzugsweise werden zur Bestimmung der realen und simulierten Pose Vorwärtskinematiken berechnet, und dies nochmals bevorzugt zur Diversifizierung auf unterschiedlicher Hardware der Robotersteuerung 28 und der Robotersimulation 24 beziehungsweise der Recheneinheit 30. Wie bei allen Vergleichen für eine Validierung kann durch Berücksichtigung einer Toleranz eine höhere Robustheit erreicht werden. Auch kann ein systematischer Offset toleriert werden, der von einer bekannten Latenz zwischen Roboter 10 und Robotersimulation 24 herrührt. Um solche Latenzen zwischen den beiden Berechnungen möglichst zu vermeiden, kann es sinnvoll sein, eine Synchronisationsverbindung herzustellen. Es wäre auch möglich, aus einer Beziehung zwischen Offset und Latenz aus der einen Größe auf die andere zu schließen.

Figur 8 zeigt eine Ausschnittdarstellung der Figur 5 mit dem "gelben" und dem "grünen" Pfad. Auf diesen Validierungspfaden werden jeweils reale und simulierte Sensordaten miteinander verglichen. Dabei basiert die Sensorsimulation 26 des "gelben" Pfades auf der simulierten Pose der Robotersimulation 24 und diejenige des "grünen" Pfades auf der realen Pose der Robotersteuerung 28.

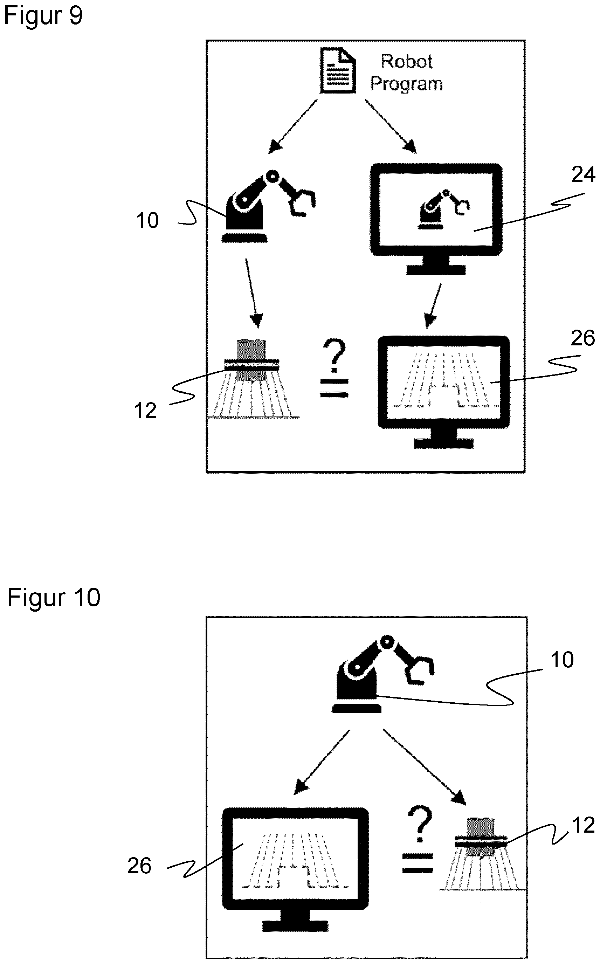

Figur 9 zeigt eine alternative Darstellung des "gelben" Pfades. Im linken Teil werden nur reale Daten erfasst, nämlich reale Sensordaten auf Basis der realen Pose. Verglichen wird entsprechend dem rechten Teil der Figur 9 mit simulierten Sensordaten auf Basis einer simulierten Pose. Der "gelbe" Pfad enthält den oben schon diskutierten Validierungspfad V2. Die realen und simulierten Sensordaten werden nur übereinstimmen, wenn sowohl die Robotersimulation 24 als auch die Sensorsimulation 26 Erwartungen stellen, die von dem Roboter 10 und dem Sensor 12 erfüllt werden.

Figur 10 zeigt eine alternative Darstellung des "grünen" Pfades, der isoliert keine Ausführungsform der Erfindung darstellt. Der erste Teil des "gelben" Pfades ist dabei sozusagen abgeschnitten, da reale Sensordaten wie simulierte Sensordaten auf der realen Pose basieren. Hiermit wird also gezielt allein die Sensorfunktion validiert. Der "grüne" Pfad entspricht dem oben schon diskutierten Validierungspfad V2.

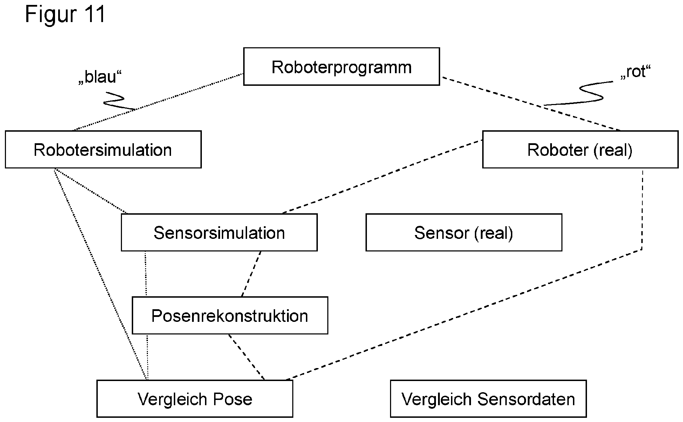

Figur 11 zeigt eine weitere Ausschnittdarstellung der Figur 5 mit dem "blauen" und dem "roten" Pfad, wobei der "rote Pfad" isoliert keine Ausführungsform der Erfindung darstellt. Hier kommt als weiterer Baustein eine Posenrekonstruktion (Matching Algorithmus) hinzu. In Kenntnis der Umgebung kann aus den simulierten Sensordaten geschlossen werden, welche reale oder simulierte Pose der Roboter in der Sensorsimulation 26 eingenommen hat. Die rekonstruierte Pose kann dann mit der realen Pose oder der simulierten Pose verglichen werden. Damit wird die Sensorsimulation 26 validiert. Es wäre womöglich präziser, hier nur von einer Plausibilisierung zu sprechen. Mehrdeutigkeiten bei sich wiederholenden Umgebungsstrukturen oder einer strukturlosen Umgebung wie der leeren Arbeitsfläche 20 können dazu führen, dass die rekonstruierte Pose nicht aufgefunden wird oder eine Übereinstimmung zeigt, die tatsächlich gar nicht gegeben ist. Der "blaue" und der "rote" Pfad unterscheiden sich voneinander dadurch, dass im "blauen" Pfad die simulierte Pose der Robotersimulation 24 in die Sensorsimulation 26 einfließt und dementsprechend die rekonstruierte Pose mit der simulierten Pose verglichen wird, während im "roten" Pfad die reale Pose einfließt und damit verglichen wird.

Es wurde oben schon erwähnt, dass es sinnvoll sein kann, Pfade miteinander zu kombinieren, um damit eine höhere Fehlererkennungswahrscheinlichkeit des Gesamtsystems zu erreichen. Dabei sind Ausführungsformen auch mit beliebigen Kombinationen der in Figur 5 gezeigten Pfade vorstellbar. Besonders interessant ist eine gleichzeitige Anwendung des "schwarzen" Pfades, der die Pose validiert, und des "grünen" Pfades, der die Sensordaten validiert. Beides wird auch durch den "gelben" Pfad allein validiert, allerdings mit einer nur indirekten Validierung der Pose und ohne eine Diagnosemöglichkeit, ob eine gescheiterte Validierung durch Abweichungen zwischen Roboter 10 und Robotersimulation 24 oder zwischen Sensor 12 und Sensorsimulation 26 verursacht wurde. Es ist natürlich möglich, den "schwarzen" Pfad zu dem "gelben" Pfad zu kombinieren, um eine verlässlichere Validierung und insbesondere diese Differenzierung zu erreichen.

## Patentansprüche

1. Computerimplementiertes Verfahren zur Validierung einer Pose eines Roboters (10) und/oder von Sensordaten eines mit dem Roboter (10) mitbewegten Sensors (10) zur Absicherung des Roboters (10), wobei eine Robotersteuerung (28) die reale Pose des Roboters (10) bestimmt, mit der die Robotersteuerung (28) für die Steuerung der Bewegung des Roboters (10) arbeitet, und der Sensor (12) reale Sensordaten misst, wobei eine Robotersimulation (24) virtuell Bewegungen des Roboters (10) durchführt und so durch eine simulierte Bewegung des Roboters (10) eine simulierte Pose des Roboters (10) und eine Sensorsimulation (26) aus der realen Pose oder der simulierten Pose durch eine simulierte Sensormessung simulierte Sensordaten des Sensors (12) bestimmt, wobei die Sensorsimulation eine Umgebungssimulation einer Umgebung (20, 22) des Roboters (10) umfasst und die simulierten Sensordaten aus dem Zusammenspiel der Sensorsimulation mit der simulierten Umgebung entstehen, und wobei die Validierung durch mindestens einen Vergleich von
(a) einer aus den simulierten Sensordaten rekonstruirten Pose des Roboters (10) mit der simulierten Pose des Roboters (10),
(b) realen Sensordaten auf Basis der realen Pose des Roboters (10) mit simulierten Sensordaten auf Basis der simulierten Pose des Roboters (10) und/oder
(c) simulierten Sensordaten untereinander erfolgt, wobei ein Vergleich von simulierten Sensordaten untereinander auf unterschiedlichen Szenarien basiert, nämlich aus einer realen Pose des Roboters (10) und einer simulierten Pose des Roboters (10) heraus.

2. Verfahren nach Anspruch 1,
wobei der Roboter (10) in einen sicheren Zustand überführt wird, wenn die Pose des Roboters (10) nicht validiert wird und/oder wenn die Sensordaten nicht validiert werden.

3. Verfahren nach Anspruch 1 oder 2,
wobei der Roboter (10) einen Endeffektor aufweist und die reale Pose des Roboters (10) eine reale Pose des Endeffektors und die simulierte Pose des Roboters (10) eine simulierte Pose des Endeffektors aufweist, insbesondere bestimmt mittels Vorwärtskinematik.

4. Verfahren nach Anspruch 3,
wobei der Sensor (12) mit dem Endeffektor mitbewegt an dem Roboter (10) angebracht ist.

5. Verfahren nach einem der vorhergehenden Ansprüche,
wobei der Sensor (12) eine TOF-Kamera oder ein berührungslos messender Distanzsensor (12a-b) ist, der längs mindestens eines Sichtstrahls (14) einen Abstandswert misst, insbesondere ein optoelektronischer Sensor, der für eine Messung von Abständen mit einem Lichtlaufzeitverfahren ausgebildet ist.

6. Verfahren nach Anspruch 5,
wobei die längs eines jeweiligen Sichtstrahls (14) gemessenen Abstandswerte mit einer Abstandsschwelle verglichen werden, um zu entscheiden, ob der Roboter (10) in einen sicheren Zustand überführt wird.

7. Verfahren nach einem der vorhergehenden Ansprüche,
wobei die von der Robotersteuerung (28) zur Verfügung gestellte reale Pose mit der simulierten Pose der Robotersimulation (24) verglichen wird.

8. Verfahren nach einem der vorhergehenden Ansprüche,
wobei mittels der Sensorsimulation (26) erste simulierte Sensordaten in einer realen Pose nach einer Bewegung des Roboters (10) und zweite simulierte Sensordaten in einer simulierten Pose nach der mittels der Robotersimulation simulierten Bewegung bestimmt und die ersten simulierten Sensordaten und die zweiten simulierten Sensordaten miteinander verglichen werden.

9. Verfahren nach einem der vorhergehenden Ansprüche,
wobei in einer nach einer Bewegung des Roboters (10) erreichten realen Pose mit dem Sensor (12) reale Sensordaten erfasst werden und mit simulierten Sensordaten verglichen werden, die die Sensorsimulation (26) in einer simulierten Pose bestimmt, die nach Simulation der Bewegung in der Robotersimulation (24) erreicht wurde.

10. Verfahren nach einem der vorhergehenden Ansprüche,
wobei in einer nach einer Bewegung des Roboters (10) erreichten realen Pose mit dem Sensor (12) reale Sensordaten erfasst werden und mit simulierten Sensordaten verglichen werden, die die Sensorsimulation (26) in der realen Pose bestimmt.

11. System aufweisend einen Roboter (10), eine Robotersteuerung (28), einen mit dem Roboter (10) mitbewegten Sensor (12) sowie eine mindestens mittelbar mit der Robotersteuerung (28) und dem Sensor (12) verbundene Recheneinheit (30),
**dadurch gekennzeichnet,**
**dass** in der Recheneinheit (30) eine Robotersimulation (24) zum Simulieren von Bewegungen des Roboters (10) und eine Sensorsimulation (26) zum Simulieren von Messungen des Sensors (12) sowie ein Verfahren zur Validierung einer Pose des Roboters (10) und/oder von Sensordaten des Sensors (12) nach einem der vorhergehenden Ansprüche implementiert sind.

## Claims

1. A computer-implemented method for validating a pose of a robot (10) and/or sensor data of a sensor (10) moving with the robot (10) for safeguarding the robot (10), wherein a robot controller (28) determines the real pose of the robot (10), with which the robot controller (28) operates for controlling the movement of the robot (10), and the sensor (12) measures real sensor data, wherein a robot simulation (24) virtually performs movements of the robot (10) and thus determines a simulated pose of the robot (10) by a simulated movement of the robot (10) and a sensor simulation (26) determines simulated sensor data of the sensor (12) from the real pose or the simulated pose by a simulated sensor measurement, wherein the sensor simulation comprises an environment simulation of an environment (20, 22) of the robot (10) and the simulated sensor data result from the interaction of the sensor simulation with the simulated environment, and wherein the validation is performed by at least one comparison of
(a) a pose of the robot (10) reconstructed from the simulated sensor data with the simulated pose of the robot (10),
(b) real sensor data based on the real pose of the robot (10) with simulated sensor data based on the simulated pose of the robot (10) and/or
(c) simulated sensor data with each other, wherein a comparison of simulated sensor data with each other is based on different scenarios, namely from a real pose of the robot (10) and a simulated pose of the robot (10) .

2. The method according to claim 1,
wherein the robot (10) is transferred to a safe state if the pose of the robot (10) is not validated and/or if the sensor data is not validated.

3. The method according to claim 1 or 2,
wherein the robot (10) comprises an end effector and the real pose of the robot (10) comprises a real pose of the end effector and the simulated pose of the robot (10) comprises a simulated pose of the end effector, in particular determined by means of forward kinematics.

4. The method according to claim 3,
wherein the sensor (12) is attached to the robot (10) so as to move with the end effector.

5. The method according to any of the preceding claims,
wherein the sensor (12) is a TOF camera or a non-contact measuring distance sensor (12a-b) that measures a distance value along at least one visual beam (14), in particular an optoelectronic sensor which is configured for measuring distances using a light time-of-flight method.

6. The method according to claim 5,
wherein the distance values measured along a respective line of sight (14) are compared with a distance threshold to decide whether the robot (10) is transferred to a safe state.

7. The method according to any of the preceding claims,
wherein the real pose provided by the robot controller (28) is compared with the simulated pose of the robot simulation (24).

8. The method according to any of the preceding claims,
wherein first simulated sensor data in a real pose after a movement of the robot (10) and second simulated sensor data in a simulated pose after the movement simulated by means of the robot simulation are determined by means of the sensor simulation (26), and the first simulated sensor data and the second simulated sensor data are compared with each other.

9. The method according to any of the preceding claims,
wherein, in a real pose achieved after a movement of the robot (10), real sensor data is acquired with the sensor (12) and compared with simulated sensor data determined by the sensor simulation (26) in a simulated pose achieved after simulation of the movement in the robot simulation (24).

10. The method according to any of the preceding claims,
wherein in a real pose reached after a movement of the robot (10), real sensor data is acquired with the sensor (12) and compared with simulated sensor data determined by the sensor simulation (26) in the real pose.

11. A system comprising a robot (10), a robot controller (28), a sensor (12) moving with the robot (10) and a computing unit (30) connected at least indirectly to the robot controller (28) and the sensor (12),
**characterized in that** a robot simulation (24) for simulating movements of the robot (10) and a sensor simulation (26) for simulating measurements of the sensor (12) as well as a method for validating a pose of the robot (10) and/or sensor data of the sensor (12) according to any of the preceding claims are implemented in the computer unit (30).

## Revendications

1. Procédé mis en oeuvre par ordinateur pour valider une pose d'un robot (10) et/ou des données de capteur d'un capteur (12) se déplaçant avec le robot (10) pour sécuriser le robot (10), une commande de robot (28) déterminant la pose réelle du robot (10) avec laquelle la commande de robot (28) travaille pour commander le mouvement du robot (10), et le capteur (12) mesurant des données de capteur réelles,
dans lequel
une simulation de robot (24) exécute virtuellement des mouvements du robot (10) et détermine ainsi, par un mouvement simulé du robot (10), une pose simulée du robot (10), et une simulation de capteur (26) détermine, par une mesure de capteur simulée, des données de capteur simulées du capteur (12) à partir de la pose réelle ou de la pose simulée,
la simulation de capteur inclut une simulation environnementale d'un environnement (20, 22) du robot (10), et les données de capteur simulées résultent de l'interaction entre la simulation de capteur et l'environnement simulé, et
la validation se fait par au moins une comparaison
(a) d'une pose du robot (10) reconstruite à partir des données de capteur simulées avec la pose simulée du robot (10),
(b) des données de capteur réelles basées sur la pose réelle du robot (10) avec des données de capteur simulées basées sur la pose simulée du robot (10), et/ou
(c) des données de capteur simulées entre elles, une comparaison des données de capteur simulées entre elles étant basée sur différents scénarios, à savoir sur une pose réelle du robot (10) et une pose simulée du robot (10).

2. Procédé selon la revendication 1,
dans lequel le robot (10) est transféré dans un état sécurisé si la pose du robot (10) n'est pas validée et/ou si les données de capteur ne sont pas validées.

3. Procédé selon la revendication 1 ou 2,
dans lequel le robot (10) comporte un effecteur terminal, et la pose réelle du robot (10) inclut une pose réelle de l'effecteur terminal, et la pose simulée du robot (10) inclut une pose simulée de l'effecteur terminal, déterminées en particulier par cinématique directe.

4. Procédé selon la revendication 3,
dans lequel le capteur (12) est monté sur le robot (10) en se déplaçant avec l'effecteur terminal.

5. Procédé selon l'une des revendications précédentes,
dans lequel le capteur (12) est une caméra TOF ou un capteur de distance (12a-b) mesurant sans contact physique une valeur de distance le long d'au moins un faisceau de vision (14), en particulier un capteur optoélectronique configuré pour mesurer des distances par un procédé de temps de vol de la lumière.

6. Procédé selon la revendication 5,
dans lequel les valeurs de distance mesurées le long d'un faisceau de vision (14) respectif sont comparées à un seuil de distance afin de décider si le robot (10) doit être transféré dans un état sécurisé.

7. Procédé selon l'une des revendications précédentes,
dans lequel la pose réelle fournie par la commande de robot (28) est comparée à la pose simulée de la simulation de robot (24).

8. Procédé selon l'une des revendications précédentes,
dans lequel, au moyen de la simulation de capteur (26), des premières données de capteur simulées sont déterminées dans une pose réelle après un mouvement du robot (10,) et des deuxièmes données de capteur simulées sont déterminées dans une pose simulée après le mouvement simulé au moyen de la simulation de robot, et les premières données de capteur simulées et les deuxièmes données de capteur simulées sont comparées entre elles.

9. Procédé selon l'une des revendications précédentes,
dans lequel, dans une pose réelle atteinte après un mouvement du robot (10), des données de capteur réelles sont saisies avec le capteur (12) et sont comparées à des données de capteur simulées que la simulation de capteur (26) détermine dans une pose simulée atteinte après simulation du mouvement dans la simulation de robot (24).

10. Procédé selon l'une des revendications précédentes,
dans lequel, dans une pose réelle atteinte après un mouvement du robot (10), des données de capteur réelles sont saisies avec le capteur (12) et sont comparées à des données de capteur simulées que la simulation de capteur (26) détermine dans la pose réelle.

11. Système présentant un robot (10), une commande de robot (28), un capteur (12) se déplaçant avec le robot (10) ainsi qu'une unité de calcul (30) reliée au moins indirectement à la commande de robot (28) et au capteur (12), **caractérisé en ce que**
une simulation de robot (24) pour simuler des mouvements du robot (10) et une simulation de capteur (26) pour simuler des mesures du capteur (12) ainsi qu'un procédé de validation d'une pose du robot (10) et/ou de données de capteur du capteur (12) selon l'une des revendications précédentes sont mis en oeuvre dans l'unité de calcul (30).
